(19) Europäisches Patentamt / European Patent Office / Office européen des brevets

(11) **EP 4 268 194 B1**

(12) **EUROPEAN PATENT SPECIFICATION**

(45) Date of publication and mention
of the grant of the patent:
**29.07.2026 Bulletin 2026/31**

(21) Application number: **21714715.6**

(22) Date of filing: **08.02.2021**

(51) International Patent Classification (IPC):
**G06T 15/06** (2011.01)    **G06T 15/00** (2011.01)

(52) Cooperative Patent Classification (CPC):
**G06T 15/06; G06T 15/005**

(86) International application number:
**PCT/RU2021/000054**

(87) International publication number:
**WO 2022/169378 (11.08.2022 Gazette 2022/32)**

(54) **TRAVERSAL DEVICE FOR INCOHERENT RAY TRACING**

TRAVERSALVORRICHTUNG FÜR INKOHÄRENTES RAYTRACING

DISPOSITIF DE TRAVERSÉE POUR SUIVI DE RAYONS INCOHÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023 Bulletin 2023/44**

(73) Proprietor: **Huawei Technologies Co., Ltd.**
**Shenzhen, Guangdong 518129 (CN)**

(72) Inventor: **GLUSHKOV, Nikita Vadimovich**
**Shenzhen Guangdong, 518129 (CN)**

(74) Representative: **Maiwald GmbH**
**Engineering**
**Elisenhof**
**Elisenstrasse 3**
**80335 München (DE)**

(56) References cited:
**US-A1- 2017 116 760    US-A1- 2019 318 445**

• S KEELY: "Reduced Precision for Hardware Ray Tracing in GPUs", EUROGRAPHICS/ACM SIGGRAPH SYMPOSIUM OF HIGH PERFORMANCE GRAPHICS, 23-25 JUNE 2014, LYON, FRANCE, 23 June 2014 (2014-06-23), pages 29 - 40, XP055324216, DOI: 10.2312/ hpg.20141091
• TIMO AILA ET AL: "Architecture considerations for tracing incoherent rays", HIGH PERFORMANCE GRAPHICS, EUROGRAPHICS ASSOCIATION, P. O. BOX 16AIRE-LA-VILLECH-1288SWITZERLAND, 25 June 2010 (2010-06-25), pages 113 - 122, XP058376236
• K VAIDYANATHAN ET AL: "Watertight ray traversal with reduced precision", PROCEEDINGS OF HIGH PERFORMANCE GRAPHICS, 20 June 2016 (2016-06-20), pages 33 - 40, XP055677266, ISBN: 978-3-03868-008-6
• RAJAN KRISHNA ET AL: "Dual-precision fixed-point arithmetic for low-power ray-triangle intersections", COMPUTERS AND GRAPHICS, ELSEVIER, GB, vol. 87, February 2020 (2020-02-01), pages 72 - 79, XP086119702, ISSN: 0097-8493, [retrieved on 20200201], DOI: 10.1016/ J.CAG.2020.01.006

## Description

### TECHNICAL FIELD

The invention relates generally to incoherent ray tracing, and more particularly, to a traversal device for incoherent ray tracing for rendering real time three-dimensional, 3D, graphics in a computing apparatus.

### BACKGROUND

With virtual graphics being part of today's virtual life, there have been efforts to make three-dimensional, 3D, graphics appear more realistic on devices. For giving the realistic appearance, it is importance to depict light and shadows in an image. Rasterization technique is a task of taking an image described in a vector graphics format (i.e. shapes) and converting it into a render target (e.g. a series of pixels, dots, or lines, which, when displayed together, create the image which was represented via shapes). Ray tracing is a rendering technique for generating an image by tracing a path of light as pixels in an image plane and for simulating the effects of its encounters with virtual objects. This rendering technique is capable of producing a higher degree of visual realism than the rasterization techniques. These techniques are not suitable for the interactive 3D applications, because the computations of the required number of photons take long time and computational cost is more. Further, various hard optimizations are required in known approaches for interactive 3D rendering, for example, high-coherence photon processing may use rasterization technique for optimisation. Approximations and caching of the photon distribution may require optimisation with techniques such as spherical harmonics, light-maps, and such other algorithms. Also, optimization of the ray tracing on functional representation of a scene is achieved by voxel meshes, two dimensional, 2D, textures, signed-distance functions, family of screen-space algorithms, and rendering of sea surface. Reduction of photon number and hard optimization computations allows developers to achieve acceptable frame rendering time (i.e. in milliseconds) and to show interactivity of the rendering in the scene. Unfortunately, these optimizations and reductions approaches prevent the achievement of cinematic quality interactive 3D graphics on the modem generation of a mobile hardware. Further, these approaches have limitations such as extremely complex development of the engines, low quality of the photo emulation, their inaccuracy and blur. Further, known approaches that have too high coherency prevent the rendering of physically correct diffuse effects. Thus, there is a significant gap between requirements of the cinematic-quality real-time rendering and available performance of computing apparatus, especially mobile devices.

The known approach to real time ray tracing uses steps of building bounding volume hierarchy (BVH), rasterization, ray casting, traversing, triangle intersections, intersection result usage and post processing steps. Traversing iterates all nodes of BVH, while typically each node has own axis-aligned bounding box (AABB) and each leaf contains array of triangles. Each ray may read several AABB from the random memory and intersect with it, e.g. 20-40 times per ray (average - 30). Each intersection of AABB and ray requires next float-point operations, for example, 6 multiplications, 6 additions and 12-14 comparisons. This requires next computation power as approximately 40-60 flop. Each AABB based on standard "float" types spends 192 bits or 24 bytes. So, finally, one ray may contribute approximately 1800 (60 * 30) flop and use a bandwidth of 720 bytes (24 * 30). Minimally useful number of rays to be subject to incoherent ray tracing to render simple real-time interactive diffuse and specular global illumination, smoothed reflections from non-planar and non-spheric objects and some other effects in rendering a 3D scene can be estimated as 1'200'000'000 rays per second. In particular, at least 1'000'000 rays are to be traced per frame, there are at least 60 frames per second and the ray tracing processing shall occupy about 5% of the whole time of the frame rendering, which result (1'000'000*60/5%) in the estimate of 1'200'000'000 rays per second. Thereby, a total computation power for the traversing can be estimated as ~2 teraflop per second (Tflop/s), and a bandwidth for the traversing as ~1 terabytes per second (Tbyte/s).

Further, the scene can contain 500'000 triangles. BVH traversing and other optimizations reduce number of triangles to 2-30 depending on the scene's complexity, so each ray may be intersected with 30 triangles. A size of the triangle is 40 bytes. Triangle-ray intersection is more complex than AABB-Intersection, but typical average complexity may be 60 flops. So, one ray may contribute 1800 (60 * 30) flop and use a bandwidth of 1200 bytes (40 * 30) for tri-ray intersection. Total computation power of the minimally useful real-time ray tracing for the triangle intersection is ~2 Tflop/s, and a bandwidth for the triangle intersection is ~1.5 Tbyte/s, using known approaches. Even minimally useful version (e.g. 1.2 giga-ray per second) requires a huge performance (e.g. at least 4 Tflop/s) and a bandwidth (e.g. at least 2.5Tbyte/s).

Widely used computing apparatus such as mobile devices are too slow for the real-time ray tracing, due to limited power and has a low performance. On the modern mobile platforms (e.g. Snapdragon, Mali, PowerVR), only a limited number of compute units are available. Hence, some popular modem ray tracing solutions use acceleration structure based on the bounding volume hierarchy (BVH). Incoherent ray tracing typically requires random access. Hence, memory reading is unpredictable and may not be efficiently cached as, (a) a size of memory of the existing computing apparatus is only half or several megabytes (while the BVH may take up megabytes), (b) a current cache may be required for the plain 3D data, such as temporary buffers, textures, shaders, etc or (c) it is impossible to pre-fetch the memory due to random access to small data blocks. Also, simultaneous access of hundreds compute units to the BVH may lead to conflicts in the memory and huge power consumption. The incoherent rays are predominant in high-quality rendering and creates the most taxing workloads for GPU ray casting.

'Voxel cone tracing' is a game engine technology which is fast enough to work in real-time on previous generation of the desktop and laptop graphics processing units, GPUs. However, the voxel cone tracing is not very accurate, and it takes up a lot of memory and too expensive for mobile platforms. A known hardware solution uses a hardware supported ray tracing, which is faster than other approaches. However, this hardware solution has significant physical size and great power consumption. Known solution implements a screen space ambient occlusion/screen space reflection method as a pixel shader. However, this method is very inaccurate, noisy and takes up significant bandwidth at the computing apparatus.

Spherical harmonic (SH) lighting is a family of real-time rendering techniques to produce realistic shading and shadowing with comparatively little overhead. However, this technique is inefficient for animated geometry of a scene. Another known approach uses radiosity which is an application of the finite element method to solve the rendering equation for scenes with surfaces that reflect light diffusely. However, this approach is fast and may be used even on the mobile platforms. Further, the radiosity is not very accurate and the quality of the image is limited. Known approaches uses irradiance caching, which is a ray tracing-based technique, for computing global illumination on diffuse surfaces. However, the irradiance caching is complex and an unstable (noisy) method. Another known approach uses ray marching technology which uses functional representation of 3D scenes where the 3D scene is presented as mathematical formula. However, this approach is very complex to create the dynamic scene for games. The above known approaches for rendering 3D graphics on existing computing apparatus require a complex computation, a significant memory, optionally a hardware, offer limited quality of the images or is not implementable effectively in existing computing apparatus with limited memory for 3D graphics rendering. Further, existing computing apparatus has compute units which do not provide enough rays per second for the real-time 3D graphics rendering with incoherent ray tracing. The compute units may be required to provide >1 Giga-ray per second, and if the compute units are used to provide >1 Giga-ray per second, the compute units require huge power consumption.

Therefore, there arises a need to address the aforementioned technical drawbacks in existing technologies to ensure real time 3D graphics in existing computing apparatus without using significant memory and a rendering a good image quality in a scene.

Keely S.: "Reduced Precision for Hardware Ray Tracing in GPUs", Eurographics/ACM SIGGRAPH Symposium of High Performance Graphics, 2014, DOI: 10.2312/hpg.20141091, describes accelerated ray tracing in a GPU Alia T. et al.: "Architecture considerations for tracing incoherent rays", ACM SIGGRAPH/EUROGRAPHICS Conference on High Performance Graphics (HPG '10), 2010, DOI: 10.5555/1921479.1921497, describe a parallel hardware architecture for efficient tracing of incoherent rays, e.g. for global illumination.

## SUMMARY

It is an object of the present invention to provide a traversal device for ray tracing for rendering real time three-dimensional, 3D, graphics in a computing apparatus while avoiding one or more disadvantages of prior art approaches.

This object is achieved by features of the independent claims. Further implementation forms are apparent from the dependent claims, the description, and the figures.

The disclosure provides a traversal device for ray tracing for rendering real time 3D graphics in a computer apparatus.

According to a first aspect, there is provided a traversal device for incoherent ray tracing in a computing apparatus. Incoherent rays are casted in a three-dimensional (3D) scene. The 3D scene comprises objects ordered in a bounding volume hierarchy (BVH) comprising nodes, Each node has two branches, and each branch comprises an axis-aligned bounding box (AABB) and an index referring to a next node or to a data of triangles if the node is a leaf node. The traversal device includes a plurality of traversal modules for traversing the BVH. Each traversal module has a cache memory for storing nodes of the BVH in a compressed, low-bit form. Each traversal module is configured for receiving, from a Graphical Processing Unit (GPU) of the computing apparatus, an origin and a direction of a ray, both compressed to the low-bit form using a quantization, and a tracing distance range. Each traversal module is configured for traversing the stored nodes of the BVH by consequently checking ray-AABB intersections of the ray and AABBs of the stored nodes within the tracing distance range. Each traversal module is configured for requesting a ray-triangle intersection for the ray and triangles, if a leaf node is reached. The traversal device includes a plurality of triangle modules for intersecting rays with triangles. Each triangle module has registers for storing a data of triangles in a compressed, low-bit form. Each triangle module is configured for receiving, upon request of any of the traversal modules, the data of the triangles of the leaf node based on the index comprised in the leaf. Each triangle module is configured for checking ray-triangle intersections of the ray and the triangles of the leaf within the tracing distance range. Each triangle module is configured for outputting an intersection data indicating a presence and a distance of the ray-triangle intersection. Each traversal module is configured for checking ray-AABB intersections by means of native low-bit integer arithmetic computations providing less than 0.01% of false negative intersections. Each triangle module is configured for checking ray-triangle intersections by means of native low-bit integer arithmetic computations providing less than 0.01% of false negative intersections.

The traversal device implements the plurality of traversal modules that allow the traversal device to trace a previously unavailable amount of incoherent rays, with the low power consumption that is acceptable for the computing apparatus with limited memory such as mobile platforms. The incoherent (e.g. Multi-directed) ray causes random traversing of the BVH, and therefore causes random access to the memory of the computing apparatus. The traversal device enables random load balancing of the computing apparatus and the traversal modules where ray-AABB intersection occurs processes the incoherent ray independently and have a separate memory access to the memory of the computing apparatus.

The traversal device is a specialized hardware which reduces a size of the BVH enough to fit the data in fast memory of the computing apparatus. Considering that the traversing of the BVH requires a lot of small random memory requests, the traversal device significantly accelerates the incoherent ray tracing and reduces power consumption due to simplification of the access to the memory of the computing apparatus. Each traversal module has 2 kinds of data such as AABB and indices and is optimized for various processes of the traversing (e.g. traversing the BVH and traversing the stored nodes). Further, the traversal device is optimized to implement efficient parallel processing of multiple node (e.g. 4 nodes) in one time, using only few GPU clocks per node. The traversal device reduces a bandwidth of the traversing by four times and, as a result, the power costs are significantly reduced, as the memory of the computing apparatus is sufficient for the real time 3D graphics rendering. The traversal device increases the efficiency of the memory of the computing apparatus by 4-5 times and the power consumption per incoherent ray may be reduced by 40-100 times.

Each triangle module may be configured for determining that there is no ray-triangle intersection if an inner product of vectors representing a direction of a ray and a triangle surface normal is positive or zero.

Optionally, the traversal device further includes a traversal scheduler that is configured for receiving a tracing request from the GPU. The tracing request may include the origin and the direction of the ray, the tracing distance range, and a traversal module identifier (ID). The traversal scheduler is configured for allocating a traversal module based on the traversal module ID, and sending the origin, the direction of the ray, and the tracing distance range to the allocated traversal module. The traversal scheduler may be further configured for receiving the intersection data from the triangle modules and returning the intersection data to the GPU.

A technical problem in the prior art is resolved, wherein the technical problem concerns limitations in existing computing apparatus, such as includes a high memory requirement, a higher computational cost and a poor quality, for creating high quality 3D graphics.

Therefore, in contradistinction, according to the traversal device provided in the disclosure, a special format of a hardware, i.e. traversal device is implemented as an extension for the computing apparatus's Graphics processing unit (GPU) and Central processing unit (CPU). The traversal device implements the plurality of traversal modules that allow the traversal device to trace a previously unavailable amount of incoherent rays, with the low power consumption that is acceptable for the computing apparatus with limited memory such as mobile platforms. The traversal device is a specialized hardware which reduces a size of the BVH enough to fit the data in fast memory of the computing apparatus. The traversal device allows to use limited ray tracing capabilities of the computing apparatus to render real time 3D graphics with complimentary optimizations that can be implemented on the already existing modules of the computing apparatus.

These and other aspects of the disclosure will be apparent from and the implementation(s) described below.

## BRIEF DESCRIPTION OF DRAWINGS

Implementations of the disclosure will now be described, by way of example only, with reference to the following diagrams in which:

FIG. 1 is a block diagram of a traversal device for incoherent ray tracing in a computing apparatus in accordance with an implementation of the disclosure;

FIG. 2 is a block diagram of a traversal device that performs incoherent ray tracing in a computing apparatus in accordance with an implementation of the disclosure;

FIG. 3 is a block diagram of a traversal module in accordance with an implementation of the disclosure;

FIG. 4 is a block diagram of a triangle module in accordance with an implementation of the disclosure;

FIG. 5 is a block diagram that illustrates generation of a bounding volume hierarchy, BVH, in accordance with an implementation of the disclosure;

FIG. 6 is a block diagram of bounding volume hierarchy, BVH, quantization in accordance with an implementation of the disclosure;

FIG. 7 is a flow diagram that illustrates a method of outputting an intersection data indicating a presence and a distance of a ray-triangle intersection in accordance with an implementation of the disclosure;

FIG. 8 is a block diagram that illustrates a process of compressing a plurality of triangle modules in accordance with an implementation of the disclosure;

FIG. 9 is a flow diagram of a method of ray tracing using a traversal device in accordance with an implementation of the disclosure; and

FIG. 10 is a flow diagram of a method of implementing an incoherent ray tracing using a bounding volume hierarchy, BVH, on a traversal device in accordance with an implementation of the disclosure.

## DETAILED DESCRIPTION

Implementations of the disclosure provide a traversal device for incoherent ray tracing to render real time three-dimensional, 3D, graphics on a computing apparatus. The traversal device optimizes memory of the computing apparatus by providing a plurality of traversal modules and a plurality of triangle modules for incoherent ray tracing in a 3D scene.
To make solutions of the disclosure more comprehensible for a person skilled in the art, the following implementations of the disclosure are described with reference to the accompanying drawings.
Terms such as "a first", "a second", "a third", and "a fourth" (if any) in the summary, claims, and the accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units, but may include other steps or units that are not expressly listed or that are inherent to such process, method, product, or device.

Definitions:

Render target is a portion of random-access memory, RAM, containing a bitmap used to store frame of data.
Coherent ray tracing refers to a key to ray tracing performance that is grouping bundles of rays in coherent packets and testing these packets against the three-dimensional scene instead of testing each ray individually. Coherent rays refer rays with similar
Three-dimensional, 3D, model represents a physical body using a collection of points in a 3D space, assembled in triangles or other geometric entities. Each triangle is matched with some pixel processing function (material).
Scene is a collection of 3D models, light sources, and other kinds of objects in world space, into which a camera may be placed, used to describe a scene for 3D rendering.
Graphics processing unit, GPU, is a specialized electronic circuit designed to rapidly manipulate and alter memory to accelerate the creation of images in a render target intended for output to a display device. Almost all GPU's on the market are optimized for rasterization.
Bandwidth is a rate of data transfer, bit rate or throughput, measured in bits per second. By reducing bandwidth requirements, performance of mobile device and its uptime increases.
Compute Shader or shader is a program, executed on the GPU. It provides high performance execution of general-purpose computing tasks, utilizing large numbers of parallel processors on the graphics processing unit (GPU).
Open Graphics Library, OpenGL, is a framework for rendering two-dimension, 2D, and 3D vector graphics. The application programming interface, API, is typically used to interact with the graphics processing unit, GPU, used to control hardware-accelerated rendering.
Vulkan is a low-overhead, cross-platform 3D graphics and computing framework. Vulkan targets high-performance real time 3D graphics applications such as video games and interactive media across all platforms.
Acceleration structure is a subroutine that allows to decide as quickly as possible which objects from the scene a particular ray, frustum or other primitive is likely to intersect and reject large group of objects which we know for certain the primitive will never hit.

A bounding volume hierarchy (BVH) is a tree structure on a set of geometric objects. All geometric objects are wrapped in bounding volumes that form the leaf nodes of the tree. These nodes are then grouped as small sets and enclosed within larger bounding volumes.

Global Illumination, GI, is a system that models how light is bounced off of surfaces onto other surfaces (i.e. indirect light) rather than being limited to just the light that hits a surface directly from a light source (i.e. direct light). Modelling indirect lighting allows virtual world to look more realistic and connected, since objects affect each other's appearance. Physically correct global illumination is extremely computationally expensive, and there are a lot of approximate methods proposed.

Ambient Occlusion, AO, is a shading and rendering technique used to calculate how exposed each point in a scene is to ambient lighting. For example, the interior of a tube is typically more occluded (and hence darker) than the exposed outer surfaces and becomes darker the deeper inside the tube one goes. Ambient occlusion can be seen as an accessibility value that is calculated for each surface point. In scenes with open sky, this is done by estimating the amount of visible sky for each point, while in indoor environments, only objects within a certain radius are considered and the walls are assumed to be the origin of the ambient light. The result is a diffuse, non-directional shading effect that casts no clear shadows but that darkens enclosed and sheltered areas and can affect the rendered image's overall tone.

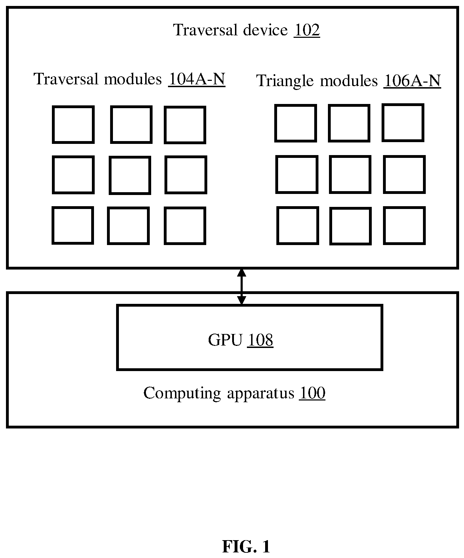

FIG. 1 is a block diagram of a traversal device 102 that performs incoherent ray tracing in a computing apparatus 100 in accordance with an implementation of the disclosure. The computing apparatus 100 includes a graphic processing unit (GPU) 108 that transmits the data related to ray tracing to the traversal device 102. Incoherent rays are casted in a three-dimensional (3D) scene, e.g. by the GPU. The 3D scene includes objects ordered in a bounding volume hierarchy (BVH) including nodes. Each node has two branches, and each branch includes an axis-aligned bounding box, AABB, and an index referring to a next node or to a data of triangles if the node is a leaf node. The traversal device 102 includes a plurality of traversal modules **104A-N,** and a plurality of triangle modules **106A-N** for ray tracing in a 3D scene. The plurality of traversal modules **104A-N** is configured for traversing the BVH. Each traversal module (e.g. **104A)** has a cache memory for storing nodes of the BVH in a compressed, low-bit form. Each traversal module is configured for receiving an origin and a direction of a ray, both compressed to the low-bit form using a quantization, and a tracing distance range. Each traversal module is configured for traversing the stored nodes of the BVH by consequently checking ray-AABB intersections of the ray and AABBs of the stored nodes within the tracing distance range. Each traversal module is configured for requesting a ray-triangle intersection for the ray and triangles, if a leaf node is reached.

The plurality of triangle modules **106A-N** is configured for intersecting rays with triangles. Each triangle module (e.g. **106A)** has registers for storing a data of triangles in a compressed, low-bit form. Each triangle module is configured for receiving the data of the triangles of the leaf node based on the index that is included in the leaf. Each triangle module is configured for checking ray-triangle intersections of the ray and the triangles of the leaf within the tracing distance range and outputting an intersection data indicating a presence and a distance of the ray-triangle intersection to the GPU 108. Each traversal module is configured for checking ray-AABB intersections by means of native low-bit integer arithmetic computations providing less than 0.01% of false negative intersections. Each triangle module is configured for checking ray-triangle intersections by means of native low-bit integer arithmetic computations providing less than 0.01% of false negative intersections.

The traversal device 102 comprises the plurality of traversal modules **104A-N,** each having separate cache (fast) memory for storing nodes of the BVH in a compressed, low-bit form, that allow the traversal device 102 to trace a previously unavailable amount of incoherent rays, with the low power consumption that is acceptable for the computing apparatus 100 with limited memory such as mobile platforms. Incoherent ray casting, i.e. casting rays from random origins to random directions, causes random traversing of the BVH, and therefore causes random access to the memory of the computing apparatus 100. The traversal device 102 enables random load balancing of the computing apparatus 100 and the plurality of traversal modules **104A-N** where ray-AABB intersection occurs processes the incoherent ray independently and have a separate memory access to the memory of the computing apparatus 100. The traversal device 102 is a specialized hardware which uses a compressed BVH of a size reduced enough to fit the data in fast memory of the traversal modules **104A-N.** Considering that the traversing of the BVH requires a lot of small random memory requests, the traversal device 102 significantly accelerates the incoherent ray tracing and reduces power consumption due to simplification of the access to the memory of the computing apparatus 100. Each traversal module is provided with 2 kinds of data such as AABB and indices and is optimized for processes of the traversing including traversing the BVH and checking for ray-AABB intersections. Further, the traversal device 102 is optimized to implement efficient parallel processing of multiple node (e.g. 4 nodes) in one time, using only few GPU clocks per node. The traversal device 102 reduces a bandwidth of the traversing by four times and, as a result, the power costs are significantly reduced, as the memory of the computing apparatus 100 is sufficient for the real time 3D graphics rendering. The traversal device 102 increases the efficiency of the memory usage of the computing apparatus 100 by 4-5 times and the power consumption per incoherent ray may be reduced by 40-100 times.

Each triangle module may be configured for determining that there is no ray-triangle intersection if an inner product of vectors representing a direction of a ray and a triangle surface normal is positive or zero. The traversal device 102 may include 50 or more traversal modules **104A-N,** or includes 200 or more traversal modules **104A-N.** Each traversal module may have 4096 to 16384 bytes of the cache memory. Each traversal module may be configured for storing 128 or more nodes of the BVH in the compressed, low-bit form. Optionally, the traversal device 102 is a system on a chip (SoC) unit. The traversal device 102 may be configured for tracing at least 1.2 billion incoherent rays per second. The traversal device 102 is configured for sharing the cache memory of the traversal modules **104A-N** with a texture mapping unit (TMU) of the GPU 108 of the computing apparatus 100.

Typically, coherent ray tracing in 3D games and other interactive 3D applications are implemented using advanced rasterization methods. The task of incoherent ray tracing follows the rasterization. So, after the rasterization, incoherent rays are casted having different, random origins and directions. Said incoherent rays are to be traced to provide a better, cinematic quality of the 3D graphics. The traversal device 102, being a specialized hardware with separate traversal modules each having separate cache memory storing the compressed, low-bit BVH, allows for effective tracing of numerous incoherent rays per second in the computing apparatus 100 without large and high-speed memory storage, such as a mobile device. The BVH is a tree structure on a set of geometric objects. All geometric objects are wrapped in bounding volumes that form the leaf nodes of the tree.

The computing apparatus's 100 memory usage is optimised as incoherent rays are processed in the plurality of traversal modules **104A-N** independently while each traversal module has a cache memory for storing nodes of the BVH in a compressed, low-bit form. Optionally, each traversal module is configured for checking ray-AABB intersections by means of approximate low-bit integer arithmetic computations providing less than 10% of false positive intersections.

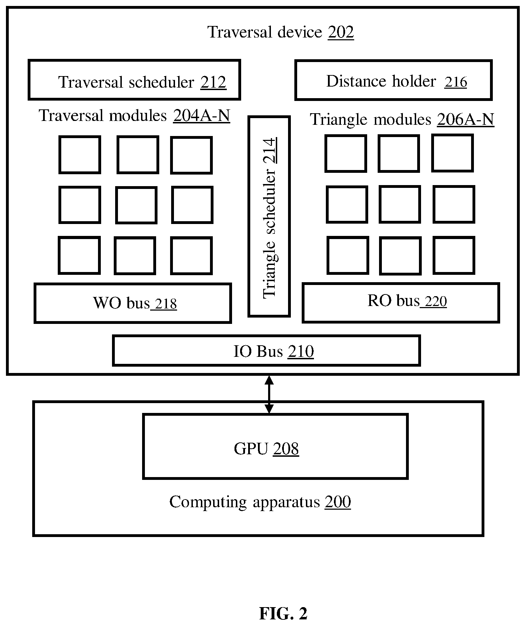

FIG. 2 is a block diagram of a traversal device 202 that performs incoherent ray tracing in a computing apparatus 200 in accordance with an implementation of the disclosure. The computing apparatus 200 includes a graphic processing unit, GPU, 208. The traversal device 202 includes a plurality of traversal modules **204A-N,** and a plurality of triangle modules **206A-N** for incoherent ray tracing in the computing apparatus 200. The traversal device 202 may further include an Input /Output, I/O, bus 210 for connecting with the GPU 208 of the computing apparatus 200. The traversal device 202 may further include a traversal scheduler 212, a write-only, WO, bus 218, a distance holder 216 and a read-only (RO) bus 220. The distance holder 216 stores a tracing distance range for each ray sent to the traversal device 202. The I/O bus 210 connects the traversal device 202 with the graphics processing unit 208 of the computing apparatus 200.

The traversal device 202 may include a traversal scheduler 212 that is configured for receiving a tracing request from the GPU 208. The tracing request may include the origin and the direction of the ray, the tracing distance range, and a traversal module identifier, ID. Certain traversal module ID can be determined by the GPU 208 on the basis of the origin and the direction of the ray, as well as a distribution of nodes of the BVH among the traversal modules. The traversal scheduler 212 is configured for allocating a traversal module (e.g. **204A**) based on the traversal module ID, and for sending the origin, the direction of the ray, and the tracing distance range to the allocated traversal module. The traversal scheduler 212 may be further configured for receiving the intersection data from the plurality of triangle modules **206A-N** and returning the intersection data to the GPU 208.

The traversal device 202 may include a triangle scheduler 214 that is configured for receiving, upon request of any of the traversal modules **204A-N,** the data of the triangles based on the index comprised in the leaf, and for allocating an available triangle module (e.g. **206A**) with sending the data of the triangles thereto. The triangle scheduler 214 is configured for sending the origin, the direction of the ray and the tracing distance range to the allocated triangle module. The triangle scheduler 214 is further configured for receiving the intersection data from the triangle modules **206A-N** and sending the same to the traversal scheduler 212.

Each traversal module (e.g. **204A**) may be configured for receiving the origin of the ray compressed to 15 to 24 bits and the direction of the ray compressed to 8 to 24 bits per axis. Cache memory of each traversal module may be configured for storing nodes of a bounding volume hierarchy, BVH, where each AABB may be compressed to 24 to 48 bits. Each triangle module (e.g. **206A**) may be configured for receiving the data of triangles comprising a triangle geometry and a triangle ID of each of the triangles. The triangle geometry of each of the triangles is compressed to 36 to 90 bits.

The traversal device 202 may save an origin of the ray with 15-24 bits, save direction of the ray with 8-12 bits, and may provide an incoherent ray tracing accuracy of $\pm 0.22$-0.013 degrees. For usual 3D graphics rendering requirements, this incoherent ray tracing accuracy may provide a good 3D scene quality. As a difference between an original ray and the compressed ray is not significant for the incoherent ray tracing (an origin and a direction of an incoherent ray are random), the compressed rays (i.e. low-bit rays) may reduce complexity of ray processing by 2-10 times due to the usage of low-bit integers. Thus, the cost of computation of the compressed ray tracing is significantly less as compared to the original uncompressed ray. The incoherent rays (i.e. random, multi directed rays) may cause the random traversing of the BVH, and therefore causes random access to the memory of the computing apparatus 200. The plurality of traversal modules **204A-N** performs random balancing on the memory of the computing apparatus 200 which allows to simplify the management of available memory for rendering of interactive 3D scene on the computing apparatus 200.

The traversal device 202 may iterate all BVH nodes and leaves, which intersect with a ray. The traversal device 202 uses algorithms with stack, stack-less, with sorting, etc. along with the data of the ray-AABB intersections and ray-triangle intersections for iterating the BVH nodes and leaves. The compressing of the BVH as mentioned above may reduce a memory size of the BVH by 5 times. The BVH that is compressed in a low-bit form may reduce a total size of the BVH, so that all BVH tree's data may fit in the cache memory of the traversal modules **204A-H** of the traversal device 202. Considering that the traversing of the BVH requires a lot of small random memory requests, the above optimization avoids the usage of the memory management unit, MMU, significantly accelerate incoherent ray tracing and reduce power consumption due to simplification of the access to the memory of the computing apparatus 200. For example, one memory bus in 64 bits may be enough to read two AABBs during one clock. Further, all processes of the traversing (e.g. traversing the BVH and traversing the stored nodes) may be optimized for one data block size, as each traversal module has 2 kinds of data such as AABB and indices. Further, the traversal device 202 optionally implements efficient parallel processing of 4 nodes at a time, using only few GPU clocks per node, instead of hundreds of clocks on a classical approach. Also, a bandwidth of the traversing may be reduced by 4 times or by 25%, and the power costs to this bandwidth may be dramatically reduced, as the traversal device 202 works with the cache memory only, not with the memory on the computing apparatus 200.

The hierarchical tree structure of the BVH has most triangles of a size compatible with a size of leaf. So, triangles may be specified relative to the leaf, a number of bits per each axis may be reduced to 4-8 using the plurality of triangle modules **206A-N,** instead of 32 for the typical solutions. The compressed triangles reuse results of traversing through the compressed BVH. The compressed triangles work as an extension of the compressed BVH. The ray is calculated in the coordinates of the node. The coordinates of the compressed ray may be used for intersection with the compressed triangle. The reusing of the ray coordinates accelerates processing of the data of the triangles 10-100 times due to using of the compressed ray, the compressed triangle, and the traversal device 202 with hardware optimized functions. Also, the bandwidth of traversing may be reduced 4-6 times. The triangles may not need to be stored in the memory of the computing apparatus 200.

The maximal number of leaves and the number of triangles may be fixed, for example 128K leaves may allow to work with 400'000-800'000 triangles. Said limited maximum number of leaves is enough for the most 3D games on the computing apparatus 200, since this fixed number of leaves may only apply to background effects of the 3D scene where the incoherent ray tracing is needed for a better, cinematic quality of the 3D graphics. The compressed BVH and the limitation of the leaves number may allow limiting the fast memory required for the BVH to a certain number. The memory of the BVH may be 1-2 Megabytes (Mb). Due to the BVH compression, bandwidth may be reduced from 1 Tera-bytes per second till 250 Giga-bytes per second. Using the following formula, it may be possible to estimate number of compute units required for the adequate ray tracing performance.

$$N_{units} = [Rays * (AvNodes * CyclesPerNode + AvLeaves * (CyclesRead + CyclesCheck)]/ GPUfreq$$

The optimal processor frequency may be 700MHz.

~5 cycles on one traversal step (read and check 4 AABB) and synchronization.

20 cycles to read triangles.

~5 cycles per 4 triangle and synchronization.

Average checked nodes per ray: 8

Average checked triangles per ray: 8 (or 3 leaves)

To provide 1.2G ray/s it is necessary N_units= ~200.

The BVH memory may be spilt into sub-BVH trees, where a number of treelets is equal to a number of compute units. Each compute unit may be integrated with small cache memory. The compute unit may have exclusive access to the cache memory. This approach eliminates conflicts for the access to the memory. The compute units may set up the ray through the traversal scheduler 212 to the plurality of traversal modules **204A-N** or the plurality of triangle modules **206A-N.** The plurality of traversal modules **204A-N** may have separate cache memory connected to a write only (WO) bus. The plurality of triangle modules **206A-N** may have separate registers connected to a read only, RO, bus.

The traversal device 202 may include the write-only bus 218 for connecting with a memory of the computing apparatus 200 storing nodes of the BVH in the compressed, low-bit form. The traversal device 202 may include the read-only bus 220 for connecting with a memory of the computing apparatus 200 storing the data of triangles in the compressed, low-bit form.

The traversal device 202 may implement the plurality of traversal modules **204A-N** that allow the traversal 202 device to trace a previously unavailable number of rays, with the low power consumption that is acceptable for the computing apparatus 200. The computing apparatus 200 may require 25-50M triangles in the scene and 50-100Mb of the memory of the computing apparatus 200. There are two key functions in raytracing: to check for an intersection between a ray and an AABB and to check for an intersection between a ray and a triangle. These two functions are utilized by providing a very tiny non-programmable traversal modules **204A-N** and the plurality of triangle modules **206A-N,** which have low power consumption and a low size on a chip of the traversal device 202 which may be connected to the GPU 208 of the computing apparatus 200. The plurality of traversal modules **204A-N** and the plurality of triangle modules **206A-N** placed on the traversal device 202 may process the rays as much roughly as possible. The plurality of traversal modules **204A-N** and the plurality of triangle modules **206A-N** are placed on the chip and may provide a number of rays that are enough to provide cinematic 3D scene quality on the computing apparatus 200, even on a mobile device with only dozens of compute units available for rendering at an instant of time.

Each traversal module may have own cache memory for the treelet of the BVH. Each 1 Kilobytes (Kb) of the cache may contain (1024/12) = 85 nodes of the BVH. The cache memory size may depend on the supported BVH size. Approximately, 1 Mb cache memory per traversal module may be utilized for mobile devices. Approximately, 100Mb cache memory per traversal module may be utilized for desktops. With certain number of compute units, for example, 256 for mobile devices or 10240 for desktop, it may be possible to share some memory blocks between different traversal modules **204A-N** and triangle modules **206A-N.** Average cache memory may be 4096-16384 bytes for each traversal module. The plurality of traversal modules **204A-N** may provide possibility to load treelets into the memory of the computing apparatus 200. Management of the treelets may be implemented on a driver's side.

Fixing the size of the memory and the number of compute units allows to implement hardware module for SoC architecture of the GPU 208. With the implementation of the fixed size of the memory and the compute units, there is a significant reduction in memory usage, bandwidth, and complexity of the real time compute unit circuit. This allows to develop the low-bit traversal device with the acceptable size on the chip that may be connected to the GPU 208 of the computing apparatus 200. Due to simplification of all stages of the ray tracing, providing acceptable power consumption per ray may be possible on the computing apparatus 200.

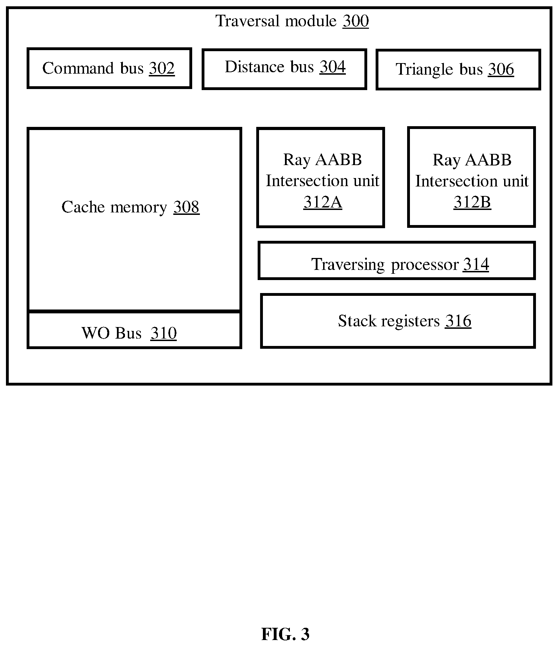

FIG. 3 is a block diagram of a traversal module 300 in accordance with an implementation of the disclosure. The traversal module 300 includes a command bus 302, a distance bus 304, a triangle bus 306, a cache memory 308, a write-only bus 310, ray-AABB intersection units **312A and 312B,** a traversing processor 314, and stack registers 316. The command bus 302 connects the traversal module 300 with the traversal scheduler of the traversal device. The distance bus 304 is for receiving a tracing distance range from the distance holder. Each traversal module 300 has the cache memory 308 for storing nodes of the BVH in a compressed, low-bit form. The traversal module 300 is configured for receiving, from a Graphical Processing Unit, GPU, of a computing apparatus through the write only, WO, bus 310, an origin and a direction of a ray, both compressed to the low-bit form using a quantization, and a tracing distance range through the distance bus 304. The traversal module 300 is configured for traversing the stored nodes of the BVH by consequently checking ray-AABB intersections of the ray and AABBs of the stored nodes within the tracing distance range. The traversal module 300 is further configured for requesting a ray-triangle intersection for the ray and triangles, if a leaf node is reached, through the triangle bus 306. Results of the ray-AABB intersections can be moved to the stack registers 316.

Optionally, the traversal module 300 includes two or more ray-AABB intersection units **312A, 312B** for checking ray-AABB intersections and a traversing processor 314. Each traversal module 300 may be configured for traversing the BVH by different rays in parallel. Optionally, the traversing processor 314 controls the operation of the two or more ray-AABB intersection units **312A, 312B** for checking ray-AABB intersections and provides them with data of ray-AABB for handling the results. The traversing processor 314 may control the entire operation of the traversal module 300. Optionally, the traversing processor 314 is configured to instruct the components of the traversal module 300 for (i) receiving, from the Graphical Processing Unit (GPU) of a computing apparatus, an origin and a direction of a ray, both compressed to the low-bit form using a quantization, and a tracing distance range, (ii) traversing the stored nodes of the BVH by consequently checking ray-AABB intersections of the ray and AABBs of the stored nodes within the tracing distance range, and (iii) requesting a ray-triangle intersection for the ray and triangles, if a leaf node is reached.

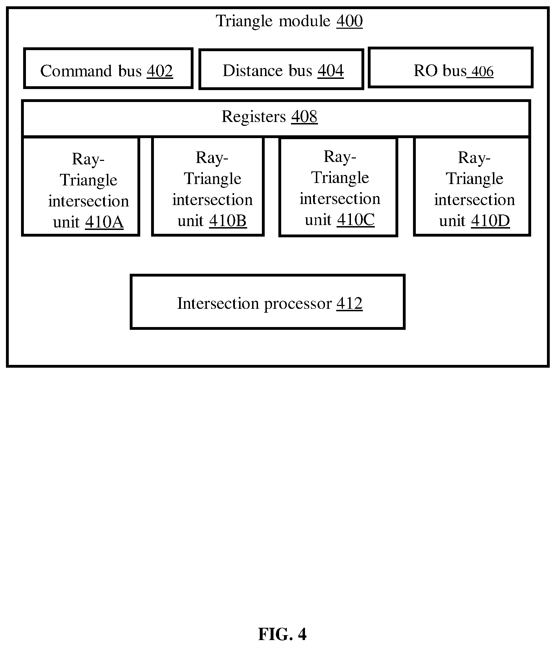

FIG. 4 is a block diagram of a triangle module 400 in accordance with an implementation of the disclosure. Each triangle module 400 includes a command bus 402, a distance bus 404, a read only, RO, bus 406, registers 408, triangle intersection units **410A-D,** and an intersection processor 412. The command bus 402 connects the triangle module 400 with the triangle scheduler of the traversal device. The triangle module 400 is configured for receiving, upon request of any of the traversal modules, a data of the triangles of the leaf node, in a compressed, low-bit form, based on the index comprised in the leaf. The registers 408 are configured to store the data of triangles in the compressed, low-bit form. The triangle module 400 can receive parameters of a ray through the command bus 402 and a tracing distance range through the distance bus 404. The triangle intersection units **410A-D** can check ray-triangle intersections of the ray with each of the triangles of the leaf. The ray-triangle intersections of the ray and the triangles of the leaf within the tracing distance range are provided to the intersection processor 412 that outputs an intersection data indicating a presence and a distance of the ray-triangle intersection to the GPU of the computing apparatus through the RO bus 406.

EP 4 268 194 B1

The registers 408 optionally store data of triangles including a triangle geometry and a triangle ID of each of the triangles. The triangle geometry of each of the triangles is compressed to 36 to 90 bits. Each triangle module 400 may be configured for receiving the data of two or more triangles per operation, or for receiving the data of four or more triangles, per operation. Each triangle module 400 may include four or more ray-triangle intersection units **410A-D** for checking ray-triangle intersections and the intersection processor 412. Each triangle module 400 may be configured for intersecting different rays with the triangles in parallel.

Optionally, the intersection processor 412 controls the operation of the four or more ray-triangle intersection units **410A-D** for checking ray-triangle intersections and provides them with data of ray-AABB for handling the results. The intersection processor 412 may control the entire operation of the triangle module 400. Optionally, the intersection processor 412 is configured to instruct the components of the triangle module 400 for (i) receiving, upon request of any of the traversal modules, the data of the triangles of the leaf node based on the index comprised in the leaf, (ii) checking ray-triangle intersections of the ray and the triangles of the leaf within the tracing distance range, and (iii) outputting an intersection data indicating a presence and a distance of the ray-triangle intersection.

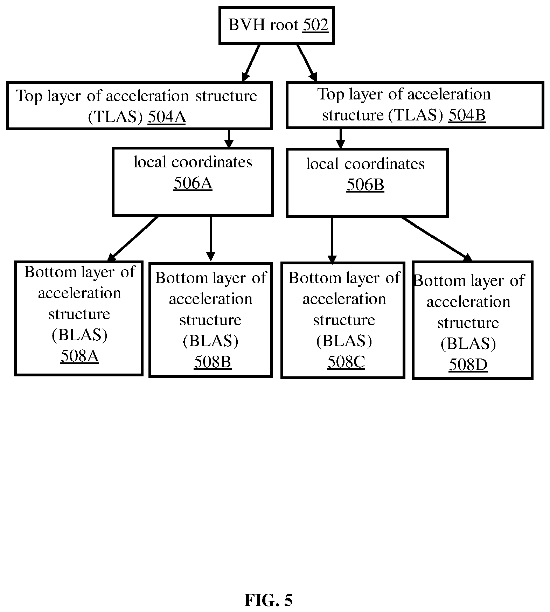

FIG. 5 is a block diagram that illustrates generation of a bounding volume hierarchy, BVH, in accordance with an implementation of the disclosure. The block diagram includes a BVH root 502 that may be branched into top layer of acceleration structures, TLAS, 504A-B, and bottom layer of acceleration structures, BLAS, 508A-D. The bottom layer of acceleration structures, BLAS, 508A-D may be implemented as the BVH, and be used for an internal geometry of objects. The top layer of acceleration structures, TLAS, 504A-B for objects of a scene. The BVH root 502 enables to update the bottom layer of acceleration structures, BLAS, 508A-D for fully animated objects. The top layer of acceleration structures, TLAS, 504A-B may be updated every frame. The top layer of acceleration structures, TLAS, 504A-B may be small in structure. For example, a number of leaves (objects) on the scene - typically up to 100-1000, while a number of triangles in some BLAS can be up to 100'000-1'000'000, thereby increasing speed of updating of TLAS. For objects with affine animation can be faster to transform ray in local coordinates 506A-B of the object, instead of rebuilding the bottom layer of acceleration structures, BLAS, 508A-D. To support the affine animation, there are special "transforms" between the top layer of acceleration structures. TLAS, 504A-B, and the bottom layer of acceleration structures, BLAS, 508A-D.

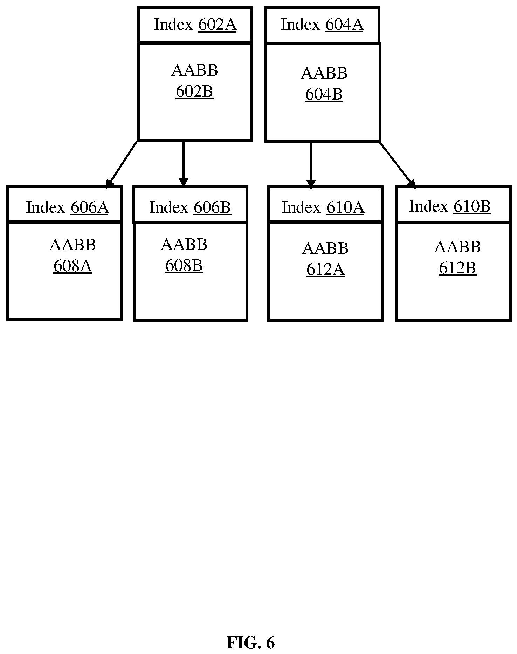

FIG. 6 is a block diagram of bounding volume hierarchy, BVH, in accordance with an implementation of the disclosure. The bounding volume hierarchy, BVH, includes a tree that includes branches. Each branch includes a parent node branching into two nodes each. Each node of the BVH may include a description of branches or children nodes. Each branch or a child node includes a description of an axis aligned bounding box (AABB) and the index that refers to a next node or a leaf node. The AABB defines in coordinates of the object in a 3D scene. A first parent node includes an index 602A, and an axis aligned bounding box (AABB) 602B, and a second parent node includes an index 604A and an AABB 604B. The first parent node has a first child that includes a first child node with an index 606A and an AABB 608A and a second child node with an index 606B and an AABB 608B. The second parent node includes a second child that includes a third child node with an index 610A and an AABB 612A and a fourth child node with an index 610B and an AABB 612B.

The children's BVH may be based on fp32, fp24, or fp16 format of values. By quantization of a child AABB for each node, the BVH may be optimized. The size of the child is compatible with the size of the parent node.

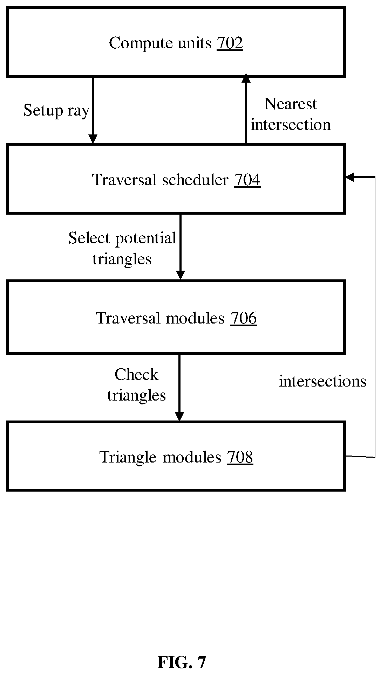

FIG. 7 is a flow diagram that illustrates a method of outputting an intersection data indicating a presence and a distance of a ray-triangle intersection in accordance with an implementation of the disclosure. At a step 702, a ray is set up by compute units. A Graphical Processing Unit, GPU, of a computing apparatus, may include a plurality of compute units. At a step 704, potential triangles are selected by a traversal scheduler. At a step 706, checked if ray-AABB intersections of the ray and AABBs of stored nodes within a tracing distance range by a traversal module. Each traversal module is configured for checking ray-AABB intersections by means of native low-bit integer arithmetic computations providing less than 0.01% of false-negative intersections. At a step 708, checked ray-triangle intersections of the ray and the triangles of a leaf within the tracing distance range, and an intersection data indicating a presence and a distance of the ray-triangle intersection are outputted by a plurality of triangle modules.

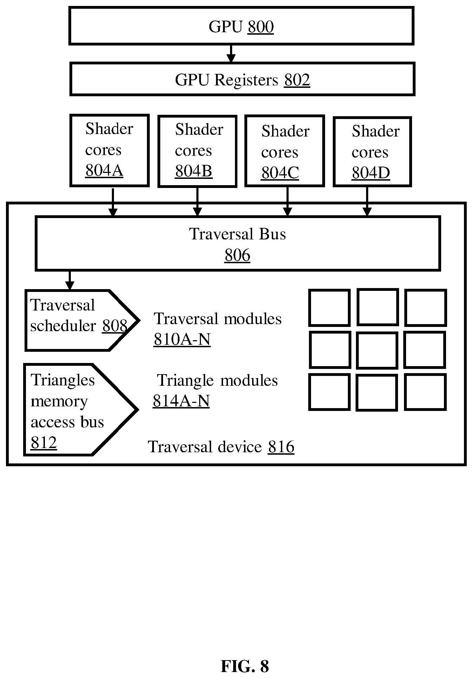

FIG. 8 is a block diagram that illustrates communications for the incoherent ray tracing in accordance with an implementation of the disclosure. The block diagram includes a Graphical Processing Unit, GPU, 800, GPU registers 802, a plurality of shader cores 804A-D in communication with a traversal bus 806 of a traversal device 816. The traversal device 816 includes a traversal scheduler 808, a plurality of traversal modules 810A-N, a triangles memory access bus 812, and the plurality of triangle modules 814A-N. The Graphical Processing Unit, GPU, 800 of a computing apparatus, provides a tracing request that may include an origin and a direction of a ray, a tracing distance range, and a traversal module identifier (ID). The traversal scheduler 808 is configured for receiving the tracing request from the Graphical Processing Unit, GPU, 800 through the plurality of shader cores 804A-D in communication with the traversal bus 806. The traversal scheduler 808 is configured for allocating a traversal module of the plurality of traversal modules 810A-N based on the traversal module ID, and sending the origin, the direction of the ray, and the tracing distance range to an allocated traversal module. The traversal scheduler 808 may be further configured for receiving the intersection data from the plurality of triangle modules 814A-N and returning the intersection data to the GPU 800. The plurality of traversal modules 810A-N is configured for traversing the BVH, wherein each traversal module has a cache memory for storing nodes of a bounding volume hierarchy, BVH, in a compressed, low-bit form and is configured for (i) receiving, from the Graphical Processing Unit, GPU, 800, the origin and the direction of the ray, both compressed to the low-bit form using a quantization, and a tracing distance range, (ii) traversing stored nodes of the BVH by consequently checking ray-AABB intersections of the ray and AABBs of the stored nodes within the tracing distance range and (iii) requesting a ray-triangle intersection for the ray and triangles if a leaf node is reached.

The plurality of triangle modules 814A-N is configured for intersecting rays with triangles. Data of triangles to be intersected is obtained by the traversal device 816 through the triangles memory access bus 812 in a compressed, low-bit form. Each triangle module has registers for storing the data of triangles in the compressed, low-bit form and is configured for (i) receiving, upon request of any of the traversal modules, the data of the triangles of the leaf node based on the index comprised in the leaf, (ii) checking ray-triangle intersections of the ray and the triangles of the leaf within the tracing distance range, and (iii) outputting an intersection data indicating a presence and a distance of the ray-triangle intersection. Each traversal module is configured for checking ray-AABB intersections by means of native low-bit integer arithmetic computations providing less than 0.01% of false-negative intersections. Each triangle module is configured for checking ray-triangle intersections by means of native low-bit integer arithmetic computations providing less than 0.01% of false negative intersections.

Each traversal module has its own cache for treelet of the BVH. Each 1Kb of the cache may include (1024/12) = 85 nodes of the BVH. Average cache size depends on supported BVH size (for example 1Mb for mobiles, or 100Mb for desktops), a number of units (for example 256 for mobile or 10240 for a desktop), possibility to share some memory blocks between different traversal modules. The number of units may be 4096-16384 bytes.

The traversal device 816 utilizes the plurality of traversal modules 810A-N and the plurality of triangle modules 814A-N for the incoherent ray tracing to achieve details in 3D scenes and enables to include finer details of an object in a 3D scene. Optionally, triangles may be compressed using quantization. Optionally, size of each triangle is compatible with size of a node or a leaf node.

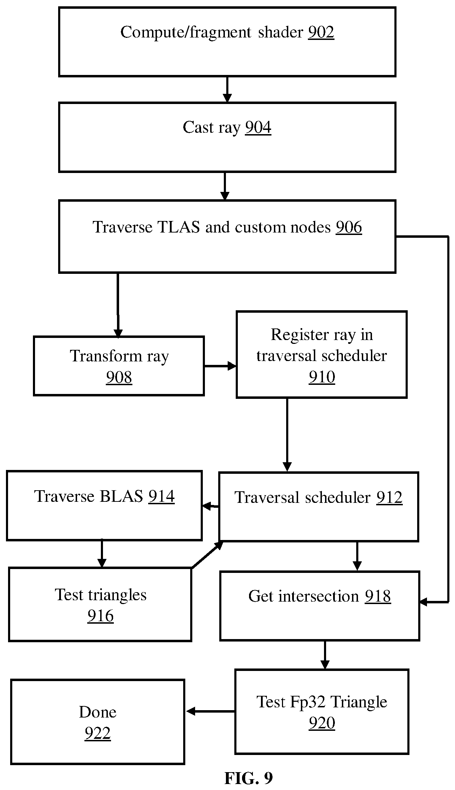

FIG. 9 is a flow diagram of a method of ray tracing using a traversal device in accordance with an implementation of the disclosure. At a step 902, the ray tracing is initiated at a compute or fragment shader. At a step 904, a ray is cast by the compute or fragment shader. At a step 906, a float-point based Top layer of acceleration structure, TLAS, and custom nodes are traversed using any intrinsic shader function. At a step 908, for each TLAS's leaf that refers to a bottom layer of acceleration structure, BLAS, the ray may be transformed using corresponding transformation, and converted to a low-bit format. All said steps 902-908 can be performed in a computing apparatus, but outside of the traversal device. At a step 910, the ray is registered in a traversal scheduler of the traversal device. At a step 912, a corresponding traversal module is allocated and initialized traversing by the traversal scheduler. The traversal scheduler may match the compute or fragment shader, ray Id, and distance of the ray to control distributed processes. At a step 914, checked nodes of the BLAS, and triangles are sent to a triangle module for each BLAS's leaf. At a step 916, low-bit triangles are tested to push intersection data to the scheduler by the triangle module if the triangle module identifies an intersection and the intersection is closer than a distance stored in the traversal scheduler. The triangle module has access to a GPU memory bus and can download several compressed triangles at one time. At a step 918, the intersection data is obtained from the traversal scheduler and combined with the data of the traversing of the TLAS and the custom nodes. At a step 920, optionally a FP32 triangle is tested, i.e. tested is a ray-triangle intersection using non-compressed variables of single-precision floating-point format, FP32. After TLAS traversing completed, the compute or fragment shader requests closest point from the traversal scheduler. After all traversal Modules and triangle Modules completed the ray processing (in accordance with Ray ID), the traversal scheduler returns the distance and point intersection into the shader, after that the traversing of the ray is completed at a step 922.

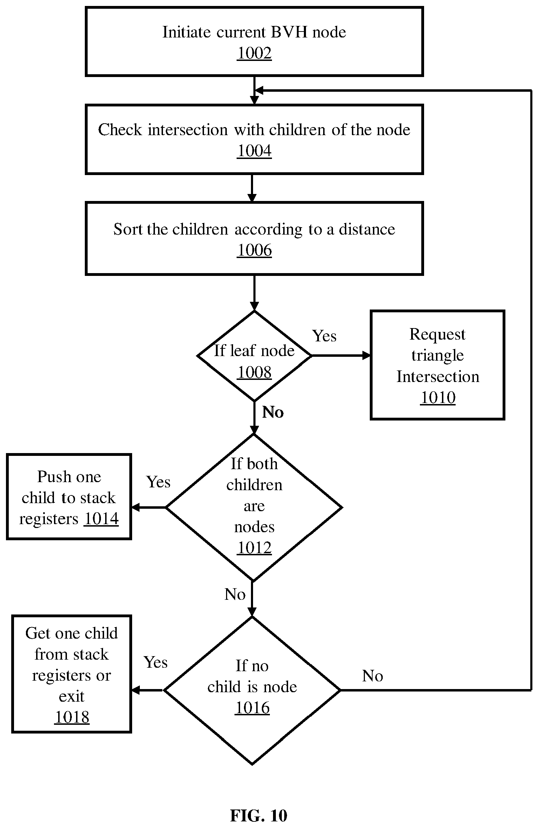

FIG. 10 is a flow diagram of a method of implementing an incoherent ray tracing using a bounding volume hierarchy, BVH, on a traversal device in accordance with an implementation of the disclosure. At a step **1002,** a current node is initiated at the traversal device. At a step **1004,** intersection is checked with children of the node by checking ray an axis-aligned bounding box, AABB, intersections. At a step **1006,** children nodes are sorted in accordance with a distance. At a step **1008,** it is checked if the children nodes are leaf nodes. If YES, a triangle intersection test is requested at a step **1010.** Else, it goes to a step **1012.** At the step **1012,** it is checked if both children are nodes. If YES, one child node is pushed to stack registers at a step **1014.** Else, it goes to a step **1016.** At the step **1016,** it is checked if no child is the leaf node. If YES, one child node is obtained from the stack registers or this process is exited at a step **1018.** Else, it goes to the step **1004.**

The computing apparatus may be provided including at least one processor wherein the computing apparatus may be implemented using any suitable protocol, such as PCI (Peripheral Component Interconnect), PCI-Express, AGP (Accelerated Graphics Port), HyperTransport, or any other bus or point-to-point communication protocol (s). The computing apparatus also includes a data memory.

Control logic (software) and data are stored in the memory which may take the form of random-access memory (RAM). In the description, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The computing apparatus may also include a secondary storage. The secondary storage includes, for example, a hard disk drive, a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in the memory and/or the secondary storage. Such computer programs, when executed, enable the system to perform various functions. The memory, the secondary storage and/or any other storage are possible examples of computer-readable media.

In an implementation, the architecture and functionality of the various previous figures may be implemented in the context of the processor, a graphics processor unit (GPU) coupled to a communication interface, an integrated circuit that is capable of at least a portion of the capabilities of both the processor and the GPU, a chipset (i.e., a group of integrated circuits designed to work and sold as a unit for performing related functions, etc.), and/or any other integrated circuit for that matter. Still yet, the architecture and functionality of the various previous figures may be implemented in the context of a general computer system, a circuit board system, a game console system dedicated for entertainment purposes, an application-specific system, and/or any other desired system. For example, the computing apparatus may take the form of a mobile device, desktop computer, laptop computer, server, workstation, game consoles, embedded system, and/or any other type of logic.

Still yet, the computing apparatus may take the form of various other devices including, but not limited to a personal digital assistant (PDA) device, a mobile phone device, a television, etc. Further, while not shown, the computing apparatus may be coupled to a network (e.g., a telecommunications network, local area network (LAN), wireless network, wide area network (WAN) such as the Internet, peer-to-peer network, cable network, or the like) for communication purposes through an I/O interface.

It should be understood that the arrangement of components illustrated in the figures described are exemplary and that other arrangement may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the disclosure and its advantages have been described in detail, it should be understood that various changes, substitutions, and alterations can be made herein without departing from the scope of the invention as defined by the appended claims.

**Claims**

1.  A traversal device (102, 202, 816) for incoherent ray tracing in a graphics rendering computing apparatus (100, 200), wherein incoherent rays are casted in a three-dimensional, 3D, scene, the 3D scene comprises objects ordered in a bounding volume hierarchy, BVH, comprising nodes, each node having two branches, each branch comprising an axis-aligned bounding box, AABB, and an index referring to a next node or to a data of triangles if the node is a leaf node, the traversal device comprising:

    a plurality of traversal modules (104A-N, 204A-N, 300, 810A-N) for traversing the BVH, wherein each traversal module has a cache memory for storing nodes of the BVH in a compressed, low-bit form and is configured for

        receiving, from a Graphical Processing Unit, GPU, (108, 208, 800) of the computing apparatus, an origin and a direction of a ray, both compressed to the low-bit form using a quantization, and a tracing distance range, traversing the stored nodes of the BVH by consequently checking ray-AABB intersections of the ray and AABBs of the stored nodes within the tracing distance range, and requesting a ray-triangle intersection for the ray and triangles, if a leaf node is reached,

a plurality of triangle modules (106A-N, 206A-N, 400, 814A-N) for intersecting rays with triangles, wherein each triangle module has registers (408, 802) for storing a data of triangles in a compressed, low-bit form and is configured for

receiving, upon request of any of the traversal modules, the data of the triangles of the leaf node based on the index comprised in the leaf,
checking ray-triangle intersections of the ray and the triangles of the leaf within the tracing distance range, and outputting an intersection data indicating a presence and a distance of the ray-triangle intersection,

wherein each traversal module is configured for checking ray-AABB intersections by means of native low-bit integer arithmetic computations providing less than 0.01% of false negative intersections,
wherein each triangle module is configured for checking ray-triangle intersections by means of native low-bit integer arithmetic computations providing less than 0.01% of false negative intersections.

2. The traversal device of claim 1, wherein each triangle module is configured for determining that there is no ray-triangle intersection if an inner product of vectors representing a direction of a ray and a triangle surface normal is positive or zero.

3. The traversal device of claim 1 or 2, further comprising:

a traversal scheduler (212, 808) configured for

receiving a tracing request from the GPU, the tracing request comprising the origin and the direction of the ray, the tracing distance range, and a traversal module identifier, (ID,
allocating a traversal module based on the traversal module ID, and
sending the origin, the direction of the ray, and the tracing distance range to the allocated traversal module,

wherein the traversal scheduler is further configured for receiving the intersection data from the triangle modules and returning the intersection data to the GPU.

4. The traversal device of claim 3, further comprising:
a triangle scheduler (214) configured for

receiving, upon request of any of the traversal modules, the data of the triangles based on the index comprised in the leaf,
allocating an available triangle module with sending the data of the triangles thereto, and
sending the origin, the direction of the ray and the tracing distance range to the allocated triangle module,

wherein the triangle scheduler is further configured for receiving the intersection data from the triangle modules and sending the same to the traversal scheduler.

5. The traversal device of any of claims 1 to 4, wherein each traversal module is configured for receiving the origin of the ray compressed to 15 to 24 bits and the direction of the ray compressed to 8 to 24 bits per axis.

6. The traversal device of any of claims 1 to 5, wherein the cache memory (308) of each traversal module is configured for storing nodes of the BVH where each AABB is compressed to 24 to 48 bits.

7. The traversal device of any of claims 1 to 6, wherein each triangle module is configured for receiving the data of triangles comprising a triangle geometry and a triangle ID of each of the triangles, wherein the triangle geometry of each of the triangles is compressed to 36 to 90 bits.

8. The traversal device of claim 7, wherein each triangle module is configured for receiving the data of two or more triangles per operation, or for receiving the data of four or more triangles, per operation.

9. The traversal device of any of claims 1 to 8, wherein the traversal device comprises 50 or more traversal modules, or comprises 200 or more traversal modules.

10. The traversal device of any of claims 1 to 9, wherein each traversal module has 4096 to 16384 bytes of the cache memory.

11. The traversal device of any of claims 1 to 10, wherein each traversal module is configured for storing 128 or more nodes of the BVH in the compressed, low-bit form.

12. The traversal device of any of claims 1 to 11, further comprising an Input/Output, I/O, bus (210) for connecting with the GPU of the computing apparatus.

13. The traversal device of any of claims 1 to 12, further comprising a write-only bus 218, 310) for connecting with a memory of the computing apparatus storing nodes of the BVH in the compressed, low-bit form.

14. The traversal device of any of claims 1 to 13, further comprising a read-only bus (220, 406) for connecting with a memory of the computing apparatus storing the data of triangles in the compressed, low-bit form.

15. The traversal device of any of claims 1 to 14, wherein each traversal module comprises two or more ray-AABB intersection units (312A-B) for checking ray-AABB intersections and a traversing processor (314).

**Patentansprüche**

1. Traversalvorrichtung (102, 202, 816) für inkohärentes Raytracing in einer Grafikrendering-Rechenvorrichtung (100, 200), wobei inkohärente Strahlen in einer dreidimensionalen, 3D, Szene ausgesendet werden, wobei die 3D-Szene Objekte umfasst, die in einer Knoten umfassenden Hüllkörperhierarchie, BVH, geordnet sind, wobei jeder Knoten jeweils zwei Zweige aufweist, wobei jeder Zweig einen an den Achsen ausgerichteten Quader, AABB, und einen Index aufweist, der sich auf einen nächsten Knoten oder, falls es sich bei dem Knoten um einen Blattknoten handelt, auf Daten von Dreiecken bezieht, wobei die Traversalvorrichtung Folgendes umfasst:

eine Vielzahl von Traversalmodulen (104A-N, 204A-N, 300, 810A-N) zum Durchlaufen der BVH, wobei jedes Traversalmodul einen Cache-Speicher zum Speichern von Knoten der BVH in einer komprimierten Niedrigbitform aufweist und konfiguriert ist zum
Empfangen eines Ursprungs und einer Richtung eines Strahls, die beide unter Verwendung einer Quantisierung in die Niedrigbitform komprimiert sind, sowie eines Tracing-Distanzbereichs von einer Grafikprozessoreinheit, GPU, (108, 208, 800) der Rechenvorrichtung,
Durchlaufen der gespeicherten Knoten der BVH durch aufeinanderfolgendes Überprüfen von Strahl-AABB-Schnittpunkten des Strahls und der AABBs der gespeicherten Knoten innerhalb des Tracing-Distanzbereichs und
Anfordern eines Strahl-Dreieck-Schnittpunkts für den Strahl und Dreiecke, falls ein Blattknoten erreicht wird,
eine Vielzahl von Dreiecksmodulen (106A-N, 206A-N, 400, 814A-N) zum Schneiden von Strahlen mit Dreiecken, wobei jedes Dreiecksmodul Register (408, 802) zum Speichern von Daten von Dreiecken in einer komprimierten Niedrigbitform aufweist und konfiguriert ist zum
Empfangen der Daten der Dreiecke des Blattknotens nach Anforderung eines beliebigen der Traversalmodule basierend auf dem in dem Blatt umfassten Index,
Überprüfen von Strahl-Dreieck-Schnittpunkten des Strahls und der Dreiecke des Blattes innerhalb des Tracing-Distanzbereichs und Ausgeben von Schnittpunktdaten, die ein Vorhandensein und eine Distanz des Strahl-Dreieck-Schnittpunkts angeben,
wobei jedes Traversalmodul zum Überprüfen von Strahl-AABB-Schnittpunkten mittels nativer Niedrigbit-Ganzzahlarithmetikberechnungen konfiguriert ist, die weniger als 0,01 % falsch negativer Schnittpunkte bereitstellen,
wobei jedes Dreiecksmodul zum Überprüfen von Strahl-Dreieck-Schnittpunkten mittels nativer Niedrigbit-Ganzzahlarithmetikberechnungen konfiguriert ist, die weniger als 0,01 % falsch negativer Schnittpunkte bereitstellen.

2. Traversalvorrichtung nach Anspruch 1, wobei jedes Dreiecksmodul zum Bestimmen konfiguriert ist, dass es keinen Strahl-Dreieck-Schnittpunkt gibt, wenn ein Skalarprodukt von Vektoren, die eine Richtung eines Strahls und einer Dreiecksflächennormalen darstellen, positiv oder null ist.

3. Traversalvorrichtung nach Anspruch 1 oder 2, ferner umfassend:

einen Traversalplaner (212, 808), konfiguriert zum Empfangen einer Tracing-Anforderung von der GPU, wobei die Tracing-Anforderung den Ursprung und die Richtung des Strahls, den Tracing-Distanzbereich und eine Kennung, ID, eines Traversalmoduls umfasst,

Zuweisen eines Traversalmoduls basierend auf der Traversalmodul-ID und

Senden des Ursprungs, der Richtung des Strahls und des Tracing-Distanzbereichs an das zugewiesene Traversalmodul,

wobei der Traversalplaner ferner zum Empfangen der Schnittpunktdaten von den Dreiecksmodulen und Zurückgeben der Schnittpunktdaten an die GPU konfiguriert ist.

4. Traversalvorrichtung nach Anspruch 3, ferner umfassend:

einen Dreiecksplaner (214), konfiguriert zum

Empfangen der Daten der Dreiecke nach Anforderung eines beliebigen der Traversalmodule basierend auf dem in dem Blatt umfassten Index, Zuweisen eines verfügbaren Dreiecksmoduls mit Senden der Daten der Dreiecke daran und

Senden des Ursprungs, der Richtung des Strahls und des Tracing-Distanzbereichs an das zugewiesene Dreiecksmodul,

wobei der Dreiecksplaner ferner zum Empfangen der Schnittpunktdaten von den Dreiecksmodulen und Senden derselben an den Traversalplaner konfiguriert ist.

5. Traversalvorrichtung nach einem der Ansprüche 1 bis 4, wobei jedes Traversalmodul zum Empfangen des Ursprungs des Strahls, komprimiert auf 15 bis 24 Bit, und der Richtung des Strahls, komprimiert auf 8 bis 24 Bit pro Achse, konfiguriert ist.

6. Traversalvorrichtung nach einem der Ansprüche 1 bis 5, wobei der Cache-Speicher (308) jedes Traversalmoduls zum Speichern von Knoten der BVH konfiguriert ist, wobei jeder AABB auf 24 bis 48 Bit komprimiert ist.

7. Traversalvorrichtung nach einem der Ansprüche 1 bis 6, wobei jedes Dreiecksmodul zum Empfangen der Daten von Dreiecken konfiguriert ist, umfassend eine Dreiecksgeometrie und eine Dreiecks-ID jedes der Dreiecke, wobei die Dreiecksgeometrie jedes der Dreiecke auf 36 bis 90 Bit komprimiert ist.

8. Traversalvorrichtung nach Anspruch 7, wobei jedes Dreiecksmodul zum Empfangen der Daten von zwei oder mehr Dreiecken pro Operation oder zum Empfangen der Daten von vier oder mehr Dreiecken pro Operation konfiguriert ist.

9. Traversalvorrichtung nach einem der Ansprüche 1 bis 8, wobei die Traversalvorrichtung 50 oder mehr Traversalmodule oder 200 oder mehr Traversalmodule umfasst.

10. Traversalvorrichtung nach einem der Ansprüche 1 bis 9, wobei jedes Traversalmodul 4096 bis 16384 Byte Cache-Speicher aufweist.

11. Traversalvorrichtung nach einem der Ansprüche 1 bis 10, wobei jedes Traversalmodul zum Speichern von 128 oder mehr Knoten der BVH in der komprimierten Niedrigbitform konfiguriert ist.

12. Traversalvorrichtung nach einem der Ansprüche 1 bis 11, ferner umfassend einen Eingabe/Ausgabe-Bus, E/A-Bus, (210) zum Verbinden mit der GPU der Rechenvorrichtung.

13. Traversalvorrichtung nach einem der Ansprüche 1 bis 12, ferner umfassend einen Nur-Schreib-Bus (218, 310) zum Verbinden mit einem Speicher der Rechenvorrichtung, die Knoten der BVH in der komprimierten Niedrigbitform speichert.

14. Traversalvorrichtung nach einem der Ansprüche 1 bis 13, ferner umfassend einen Nur-Lese-Bus (220, 406) zum Verbinden mit einem Speicher der Rechenvorrichtung, die die Daten der Dreiecke in der komprimierten Niedrigbitform speichert.

15. Traversalvorrichtung nach einem der Ansprüche 1 bis 14, wobei jedes Traversalmodul zwei oder mehr Strahl-AABB-Schnittpunkteinheiten (312A-B) zum Überprüfen von Strahl-AABB-Schnittpunkten und einen Durchlaufprozessor (314) umfasst.

**Revendications**

1. Dispositif de traversée (102, 202, 816) pour suivi de rayons incohérents dans un appareil informatique de rendu graphique (100, 200), dans lequel des rayons incohérents sont projetés dans une scène tridimensionnelle, 3D, la scène 3D comprend des objets ordonnés dans une hiérarchie de volumes englobants, BVH, comprenant des nœuds, chaque nœud présentant deux branches, chaque branche comprenant une boîte englobante alignée sur les axes, AABB, et un indice faisant référence au nœud suivant ou à des données de triangles si le nœud est un nœud feuille, le dispositif de traversée comprenant :

    une pluralité de modules de traversée (104A-N, 204A-N, 300, 810AN) destinés à traverser la BVH, dans lequel chaque module de traversée présente une mémoire cache pour stocker des nœuds de la BVH sous une forme compressée à faible nombre de bits et est configuré pour
    recevoir, en provenance d'une unité de traitement graphique, GPU, (108, 208, 800) de l'appareil informatique, une origine et une direction d'un rayon, toutes deux compressées sous la forme à faible nombre de bits à l'aide d'une quantification et d'une plage de distance de traçage,
    traverser les nœuds stockés de la BVH en vérifiant successivement les intersections rayon-AABB du rayon et des AABB des nœuds stockés dans la plage de distance de traçage, et
    demander une intersection rayon-triangle pour le rayon et les triangles, si un nœud feuille est atteint,
    une pluralité de modules de triangles (106A-N, 206A-N, 400, 814AN) pour l'intersection de rayons avec des triangles, dans lequel chaque module de triangles présente des registres (408, 802) pour stocker des données de triangles sous une forme compressée à faible nombre de bits et est configuré pour
    recevoir, à la demande de l'un quelconque des modules de traversée, les données des triangles du nœud feuille sur la base de l'indice compris dans la feuille,
    vérifier des intersections rayon-triangle du rayon et des triangles de la feuille au sein de la plage de distance de traçage, et
    produire des données d'intersection indiquant une présence et une distance de l'intersection rayon-triangle,
    dans lequel chaque module de traversée est configuré pour vérifier les intersections rayon-AABB au moyen de calculs arithmétiques entiers natifs à faible nombre de bits fournissant moins de 0,01 % d'intersections faussement négatives,
    dans lequel chaque module de triangles est configuré pour vérifier des intersections rayon-triangle au moyen de calculs arithmétiques entiers natifs à faible nombre de bits fournissant moins de 0,01 % d'intersections faussement négatives.

2. Dispositif de traversée selon la revendication 1, dans lequel chaque module de triangles est configuré pour déterminer qu'il n'existe pas d'intersection rayon-triangle si un produit scalaire de vecteurs représentant une direction d'un rayon et une normale à la surface du triangle est positif ou nul.

3. Dispositif de traversée selon la revendication 1 ou 2, comprenant en outre :

    un planificateur de traversée (212, 808) configuré pour
    la réception d'une requête de traçage en provenance du GPU, la requête de traçage comprenant l'origine et la direction du rayon, la plage de distance de traçage et un identifiant, ID, de module de traversée,
    l'allocation d'un module de traversée sur la base de l'ID de module de traversée, et
    l'envoi de l'origine, de la direction du rayon et de la plage de distance de traçage au module de traversée alloué,
    dans lequel le planificateur de traversée est en outre configuré pour recevoir les données d'intersection en provenance des modules de triangles et renvoyer les données d'intersection au GPU.

4. Dispositif de traversée selon la revendication 3, comprenant en outre :

    un planificateur de triangles (214) configuré pour
    recevoir, à la demande de l'un quelconque des modules de traversée, les données des triangles sur la base de l'indice compris dans la feuille,
    allouer un module de triangles disponible en y envoyant les données des triangles, et
    envoyer l'origine, la direction du rayon et la plage de distance de traçage au module de triangles alloué,
    dans lequel le planificateur de triangles est en outre configuré pour recevoir les données d'intersection en provenance des modules de triangles et envoyer les mêmes au planificateur de traversée.

5. Dispositif de traversée selon l'une quelconque des revendications 1 à 4, dans lequel chaque module de traversée est configuré pour recevoir l'origine du rayon compressée sur 15 à 24 bits et la direction du rayon compressée sur 8 à 24 bits par axe.

6. Dispositif de traversée selon l'une quelconque des revendications 1 à 5, dans lequel la mémoire cache (308) de chaque module de traversée est configurée pour stocker des nœuds de la BVH où chaque AABB est compressé sur 24 à 48 bits.

7. Dispositif de traversée selon l'une quelconque des revendications 1 à 6, dans lequel chaque module de triangles est configuré pour recevoir les données de triangles comprenant une géométrie de triangle et un ID de triangle de chacun des triangles, dans lequel la géométrie de triangle de chacun des triangles est compressée sur 36 à 90 bits.

8. Dispositif de traversée selon la revendication 7, dans lequel chaque module de triangles est configuré pour recevoir les données de deux triangles ou plus par opération, ou pour recevoir les données de quatre triangles ou plus, par opération.

9. Dispositif de traversée selon l'une quelconque des revendications 1 à 8, dans lequel le dispositif de traversée comprend 50 modules de traversée ou plus, ou comprend 200 modules de traversée ou plus.

10. Dispositif de traversée selon l'une quelconque des revendications 1 à 9, dans lequel chaque module de traversée dispose de 4 096 à 16 384 octets de mémoire cache.

11. Dispositif de traversée selon l'une quelconque des revendications 1 à 10, dans lequel chaque module de traversée est configuré pour stocker 128 nœuds ou plus de la BVH sous la forme compressée à faible nombre de bits.

12. Dispositif de traversée selon l'une quelconque des revendications 1 à 11, comprenant en outre un bus d'entrée/sortie, E/S, (210) destiné à être connecté au GPU de l'appareil informatique.

13. Dispositif de traversée selon l'une quelconque des revendications 1 à 12, comprenant en outre un bus en écriture seule (218, 310) destiné à être connecté à une mémoire de l'appareil informatique stockant des nœuds de la BVH sous la forme compressée à faible nombre de bits.

14. Dispositif de traversée selon l'une quelconque des revendications 1 à 13, comprenant en outre un bus en lecture seule (220, 406) destiné à être connecté à une mémoire de l'appareil informatique stockant les données de triangles sous la forme compressée à faible nombre de bits.

15. Dispositif de traversée selon l'une quelconque des revendications 1 à 14, dans lequel chaque module de traversée comprend deux unités d'intersection rayon-AABB (312A-B) ou plus destinées à vérifier des intersections rayon-AABB et un processeur de traversée (314).

Traversal device 102

Traversal modules 104A-N    Triangle modules 106A-N

GPU 108

Computing apparatus 100

**FIG. 1**

Traversal device 202

Traversal scheduler 212

Distance holder 216

Traversal modules 204A-N

Triangle scheduler 214

Triangle modules 206A-N

WO bus 218

RO bus 220

IO Bus 210

GPU 208

Computing apparatus 200

**FIG. 2**

Traversal module 300

Command bus 302

Distance bus 304

Triangle bus 306

Cache memory 308

Ray AABB Intersection unit 312A

Ray AABB Intersection unit 312B

Traversing processor 314

Stack registers 316

WO Bus 310

**FIG. 3**

Triangle module 400

| Command bus 402 | Distance bus 404 | RO bus 406 |

Registers 408

| Ray-Triangle intersection unit 410A | Ray-Triangle intersection unit 410B | Ray-Triangle intersection unit 410C | Ray-Triangle intersection unit 410D |

Intersection processor 412

**FIG. 4**

BVH root 502

Top layer of acceleration structure (TLAS) 504A

Top layer of acceleration structure (TLAS) 504B

local coordinates 506A

local coordinates 506B

Bottom layer of acceleration structure (BLAS) 508A

Bottom layer of acceleration structure (BLAS) 508B

Bottom layer of acceleration structure (BLAS) 508C

Bottom layer of acceleration structure (BLAS) 508D

**FIG. 5**

| Index <u>602A</u> | Index <u>604A</u> |
|---|---|
| AABB <u>602B</u> | AABB <u>604B</u> |

| Index <u>606A</u> | Index <u>606B</u> | Index <u>610A</u> | Index <u>610B</u> |
|---|---|---|---|
| AABB <u>608A</u> | AABB <u>608B</u> | AABB <u>612A</u> | AABB <u>612B</u> |

**FIG. 6**

```
┌─────────────────────────────────────┐
│        Compute units 702             │
└─────────────────────────────────────┘
     │                      ▲
  Setup ray              Nearest
     │                  intersection
     ▼                      │
┌─────────────────────────────────────┐
│      Traversal scheduler 704         │◄──┐
└─────────────────────────────────────┘   │
            │                              │
     Select potential                      │
         triangles                         │
            ▼                              │
┌─────────────────────────────────────┐   │
│      Traversal modules 706           │   │
└─────────────────────────────────────┘   │
            │                              │
          Check            intersections   │
        triangles                          │
            ▼                              │
┌─────────────────────────────────────┐   │
│      Triangle modules 708            │───┘
└─────────────────────────────────────┘
```

**FIG. 7**

GPU 800

GPU Registers 802

| Shader cores 804A | Shader cores 804B | Shader cores 804C | Shader cores 804D |

Traversal Bus 806

Traversal scheduler 808

Traversal modules 810A-N

Triangles memory access bus 812

Triangle modules 814A-N

Traversal device 816

**FIG. 8**

FIG. 9

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEELY S**. Reduced Precision for Hardware Ray Tracing in GPUs. *Eurographics/ACM SIGGRAPH Symposium of High Performance Graphics*, 2014

- **ALIA T. et al.** Architecture considerations for tracing incoherent rays. *ACM SIGGRAPH/EUROGRAPHICS Conference on High Performance Graphics (HPG '10)*, 2010